# EUROPEAN PATENT APPLICATION

(11) **EP 4 831 678 A1**
(43) Date of publication of application: **28.10.2026**
(21) Application number: 25171658.5
(22) Date of filing: 22.04.2025
(51) Int. Cl.: G01S 7/00, G01S 13/46, H04B 7/04, H04B 7/06, H04L 5/00, H04W 64/00, G01S 13/76

(54) **RIS-AIDED SENSING AND COMMUNICATION**

(71) Applicant: Vestel Elektronik Sanayi ve Ticaret A.S., 45030 Manisa (TR)
(72) Inventor: ÖZBEK, Berna, 35430 Urla (TR); LGÜY, Mert, 35430 Urla (TR)
(74) Representative: Grünecker Patent- und Rechtsanwälte PartG mbB

(57) **Abstract**

Some embodiments in the present disclosure relate to an integrated sensing and communication, ISAC, system. The ISAC system comprises a base station configured to serve a communication apparatus; a reconfigurable intelligent surface, RIS, having N RIS elements, wherein N is an integer equal to or larger than four; and a control apparatus configured to determine, from among the N RIS elements, a number of sensing RIS elements for a sensing operation and/or a number of communication RIS elements for a communication operation using a signal to noise ratio, SNR, of a radar signal from the base station with respect to a target, and a signal to interference plus noise ratio, SINR, of a communication channel between the base station and the communication apparatus, and/or a distance between the base station and the communication apparatus and a given range between the base station and the target.

## Description

The present disclosure relates to wireless communication and sensing systems. In particular, the present disclosure provides methods for such systems.

### BACKGROUND

Wireless communication has been advancing over several decades now. Exemplary notable standards organizations include the 3rd Generation Partnership Project (3GPP) and IEEE 802.11, commonly referred to as Wi-Fi.

The use of Reconfigurable Intelligent Surfaces, RIS, is emerging as a technology for future wireless communication systems, providing significant control over the wireless environment through tunable phase shifts of reflective elements. The use of a RIS can improve both communication and sensing performance by directing wireless signals to the desired users or targets. These benefits make RIS a component for integrated sensing and communication, ISAC, systems that aim at combining sensing and communication on a single system.

ISAC systems may integrate sensing (e.g. radar) and communication functions using the same hardware and spectrum resources, and may thereby reduce the hardware complexity and spectral usage. The adoption of ISAC systems may be advantageous in applications where real-time communication and sensing are desired, such as in autonomous vehicles, industrial Internet of Things (IoT), and smart cities. Recent work has explored joint optimization techniques for beamforming and waveform design to balance communication and sensing requirements. In this framework, a subset selection method has been suggested, wherein a fixed portion of RIS elements is utilized for sensing and the remaining portion is utilized for communication, while in another approach all RIS elements may be entirely utilized for communication or entirely utilized for sensing without partitioning.

Optimization in ISAC systems does not necessarily depend solely on RIS element allocation to communication or sensing, but may be divided into three approaches: sensing-centric, communication-centric, and joint optimization. For RIS-enabled ISAC systems, communication-centric designs were studied with goals such as directing a RIS beam pattern to a communication apparatus (user) and maximizing the SINR for the communication user. On the other hand, sensing-centric designs may be utilized, which aim at maximizing the minimum beam pattern gain, enhancing the RIS beam pattern in the direction of a target, and maximizing the radar SNR and sensing echo signal. Furthermore, in RIS-enabled ISAC systems, a joint design may be applied by formulating an optimization problem that maximizes the sum communication data rate and the sum effective sensing power.

However, there is a need for an improved approach for RIS-aided sensing and communication that provides a flexible and efficient solution for ISAC applications, providing superior performance over traditional fixed allocation and without RIS approaches in terms of radar SNR.

### SUMMARY

Methods and techniques, as well as the corresponding devices, are provided, facilitating adaptive element allocation for RIS-aided integrated sensing and communication.

The present disclosure may facilitate flexible and efficient solutions for an ISAC system, wherein RIS elements are dynamically allocated to communication and sensing operations, based on a signal to interference plus noise ratio, SINR, of communication users and signal to noise ratio of a sensing signal and/or distances to a communication apparatus and a range from the base station to a sensing target.

The invention is defined by the independent claims. Some exemplary implementations are provided by the dependent claims.

According to an exemplary and non-limiting embodiment, an integrated sensing and communication, ISAC, system, is provided. The system comprises a base station configured to serve a communication apparatus; a reconfigurable intelligent surface, RIS, having N RIS elements, wherein N is an integer equal to or larger than four; and a control apparatus configured to determine, from among the N RIS elements, a number of sensing RIS elements for a sensing operation and/or a number of communication RIS elements for a communication operation using a signal to noise ratio, SNR, of a radar signal from the base station with respect to a target, and a signal to interference plus noise ratio, SINR, of a communication channel between the base station and the communication apparatus, and/or a distance between the base station and the communication apparatus and a given range between the base station and the target.

These and other features and characteristics of the presently disclosed subject-matter, as well as the methods of operation and functions of the related elements of structures, will become more apparent upon consideration of the following description and the appended claims with reference to the accompanying drawings, all of which form a part of this specification. It is to be expressly understood, however, that the drawings are for the purpose of illustration and description only and are not intended as a definition of the limits of the disclosed subject matter.

Further, although the described methods are primarily centered around certain radio access technologies and network structures like cellular networks, the proposed ideas and their variations can also be extended to other technologies and networks, including Bluetooth, ZigBee, 6G networks, 5G/New Radio (NR), Long-Term Evolution (LTE), LTE-Advanced, LTE-Advanced Pro, Internet of Things (IoT), Industrial loT (IloT), and narrowband IoT (NB-loT). Therefore, the scope of this disclosure is not confined to the given examples.

### BRIEF DESCRIPTION OF DRAWINGS

An understanding of the nature and advantages of various embodiments may be realized by reference to the following figures.
- Fig. 1: is a block diagram illustrating a basic communication system;
- Fig. 2: illustrates a general system model of an integrated sensing and communication (ISAC) system including a reconfigurable intelligent surface (RIS), to which embodiments of the present disclosure may be applied;
- Fig. 3a: is a block diagram illustrating a configuration of a base station;
- Fig. 3b: is a block diagram illustrating a configuration of a communication apparatus;
- Fig. 4: illustrates the steps of a method according to an embodiment of the present disclosure;
- Fig. 5: is a graph illustrating a sum of radar SNR versus a number of antennas of a base station for exemplary implementations of the present disclosure and comparative examples; and
- Fig. 6: is a graph illustrating a sum of radar SNR versus a number of reflecting elements at a RIS for exemplary implementations of the present disclosure and comparative examples.

### DETAILED DESCRIPTION

For purposes of the description hereinafter, the terms "end," "upper," "lower," "right," "left," "vertical," "horizontal," "top," "bottom," "lateral," "longitudinal," and derivatives thereof shall relate to the disclosed subject matter as it is oriented in the drawing figures. However, it is to be understood that the disclosed subject matter may assume various alternative variations and step sequences, except where expressly specified to the contrary. It is also to be understood that the specific devices and processes illustrated in the attached drawings, and described in the following specification, are simply exemplary embodiments or aspects of the disclosed subject matter. Hence, specific dimensions and other physical characteristics related to the embodiments or aspects disclosed herein are not to be considered as limiting unless otherwise indicated.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one." Furthermore, as used herein, the term "set" is intended to include one or more items (e.g., related items, unrelated items, a combination of related and unrelated items, and/or the like) and may be used interchangeably with "one or more" or "at least one". Where only one item is intended, the term "one" or similar language is used. Also, as used herein, the terms "has," "have," "having," or the like are intended to be open-ended terms. Further, the phrase "based on" is intended to mean "based at least partially on" unless explicitly stated otherwise.

### Basic wireless system

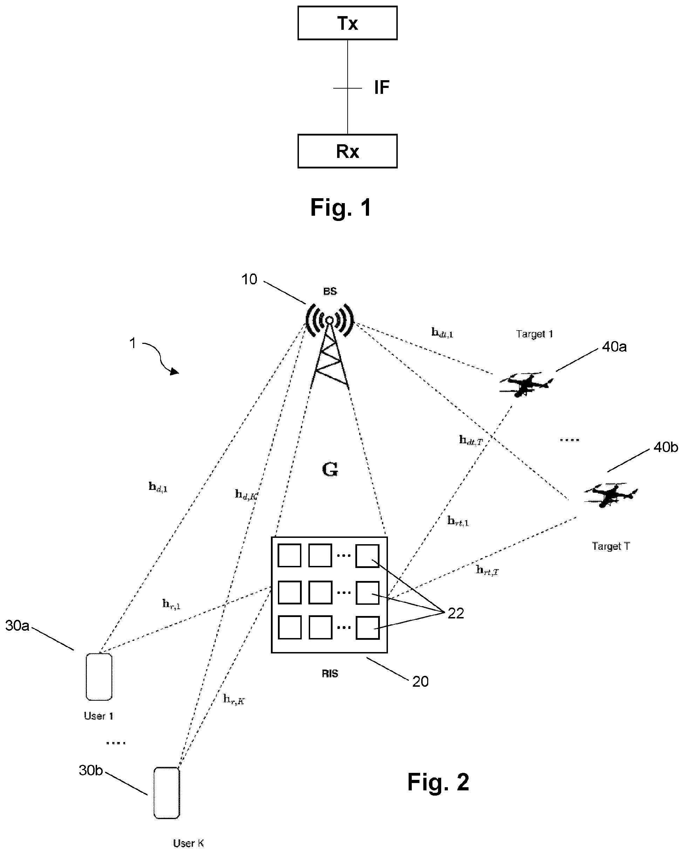

Fig. 1 illustrates an exemplary wireless system, in which Tx represents a transmitter and Rx represents a receiver of a wireless signal. The transmitter Tx is capable of transmitting a signal to the receiver Rx or to a group of receivers or to broadcast a signal over an interface IF. The interface IF may be any wireless interface. The interface IF may be specified by means of resources, which can be used for the transmission and the reception by the transmitter Tx and the receiver Rx. Such resources may be defined in one or more (or all) of the time domain, frequency domain, code domain, and space domain. It is noted that in general, a "transmitter" and a "receiver" may be also both integrated in the same device. In other words, the devices Tx and Rx in Fig. 1 may respectively also include the functionality of the Rx and Tx, respectively.

The present disclosure is not limited to any particular transmitter Tx, receiver Rx and/or interface IF implementation. However, it may be applied readily to some existing communication systems as well as to the extensions of such systems, or to new communication systems. Exemplary existing communication systems may be, for instance, the 5G New Radio (NR) in its current or future releases, and/or the IEEE 802.11 based systems such as the recently studied IEEE 802.11be or the like. The wireless signal is not necessarily a communication signal in the sense that it does not necessarily carry out human or machine communication. It may be a sensing signal such as radar signal or sounding signal or any other kind of wireless signal. The communication signal may be a signal for communication and sensing (Joint Communication & Sensing).

The IEEE 802.11, commonly referred to as Wi-Fi, has been around for three decades and has become arguably one of the most popular wireless communication standards with billions of devices supporting more than half of the worldwide wireless traffic. The increasing user demands in terms of throughput, capacity, latency, spectrum, and power efficiency calls for updates or amendments to the standard to keep up with them. As such, Wi-Fi generally has a new amendment after every 5 years with its own characteristic features. In the earlier generations, the focus was primarily on higher data rates, but with ever-increasing density of devices, area efficiency has become a major concern for Wi-Fi networks.

### Reconfigurable intelligent surfaces

Reconfigurable Intelligent Surfaces (RISs) represent a technology in the field of wireless communication and sensing. A RIS typically consists of a planar surface composed of numerous individually controllable reflective and/or transmissive elements (RIS elements). Each RIS element may be configured to manipulate the phase, amplitude, and/or polarization of incident electromagnetic waves. By controlling the electromagnetic properties of the surface, RISs enable the reconfiguration of wireless signal propagation. This ability makes RISs highly promising for enhancing wireless communication performance in terms of coverage, data rate, and/or energy efficiency.

One primary application of RISs is in wireless communication networks, particularly in the context of next-generation networks such as 6G. RISs can be strategically deployed to improve signal strength in regions with poor coverage, mitigate interference, and/or enable more efficient beamforming. Unlike traditional relays or active beamforming systems, RISs may operate passively without requiring complex radio frequency chains, resulting in lower power consumption and/or reduced hardware complexity. RISs may enhance the spectral efficiency and/or reliability of communication systems.

In addition to communication applications, RISs may be used for wireless sensing and localization. By reflecting and/or refracting sensing signals in a controlled manner, RISs can improve the detection of objects, enable high-resolution imaging, and/or enhance localization accuracy in both indoor and outdoor environments. This capability may be beneficial for applications such as autonomous vehicles, smart buildings, and/or industrial automation. The combination of communication and sensing functionalities within a single RIS infrastructure opens up possibilities for joint communication and sensing systems.

RIS technology relies on advanced materials and electronic components, including tunable metasurfaces, micro-electromechanical systems (MEMS), and/or liquid crystal-based elements. Control of the RIS elements can be achieved through dedicated hardware controllers and/or integrated circuits, enabling a reconfiguration based on system requirements or environmental conditions.

### Integrated sensing and communication (ISAC) systems

Integrated Sensing and Communication (ISAC) systems represent wireless networks that enable the simultaneous operation of communication and sensing functionalities within a shared infrastructure.

Traditional wireless systems are primarily designed for data transmission, while sensing applications, such as radar and environmental monitoring, typically rely on separate dedicated hardware and frequency resources. ISAC systems integrate these capabilities, allowing a single system to efficiently transmit data while simultaneously extracting information about the surrounding environment.

ISAC systems leverage advanced signal processing techniques and reconfigurable transceivers to optimize waveform design, beamforming, and/or resource allocation for dual communication and sensing purposes. By utilizing radio frequency signals not only for transmitting information but also for detecting and analyzing objects, ISAC systems can enhance situational awareness, improve localization accuracy, and/or support real-time environmental monitoring. This capability might be particularly relevant for autonomous vehicles, smart city infrastructure, industrial automation, and/or next-generation mobile networks.

In wireless communication networks, ISAC technology enables efficient spectrum utilization by reusing communication signals for sensing purposes. Instead of allocating separate frequency bands for radar or localization, ISAC systems may exploit the existing communication signals to derive environmental information, reducing interference and/or minimizing additional power consumption.

### Embodiments

As mentioned above, a fixed and equal allocation on RIS elements between sensing and communication may be performed and the selection for phase shift values of RIS elements may be performed using the Fast Fourier Transform (FFT) matrix. Alternatively, all RIS elements may be used together for sensing or communication purposes without partitioning and the RIS phase shift values may be determined by the Riemannian conjugate gradient (RCG) method (see, for example, H. Luo, R. Liu, M. Li, and Q. Liu, "RIS-aided integrated sensing and communication: Joint beamforming and reflection design," IEEE Transactions on Vehicular Technology, vol. 72, no. 7, pp. 9626-9630, 2023, DOI: 10.1109/TVT.2023.3248657; in the following: Luo *et al.*)*.* By designing a hierarchical codebook, RIS can perform sensing and communication functions simultaneously. The codebook may be designed to control the two-dimensional beam patterns of RIS elements, optimizing the target localization process by starting to scan with wide beams and continuing with narrow and precise beams. At each stage, RIS elements may be allocated separately for sensing and communication, and the beams may be made increasingly more sensitive, enhancing localization accuracy and maintaining communication efficiency (see, for example, E. Vlachos and A. Kaushik, "Subset selection based RIS-aided beamforming for joint radar-communications," in 2023 IEEE Wireless Communications and Networking Conference (WCNC), 2023, pp. 1-6, DOI: 10.1109/WCNC55385.2023.10119089; in the following: Vlachos *et al.*)*.*

Exemplary and non-limiting embodiments of the present disclosure relate to the adaptive allocation of RIS elements between sensing (e.g. radar sensing) and communication functions for ISAC systems depending on the signal to noise ratio (SNR) for sensing signals and signal to interference plus noise ratio (SINR) for the communication signals and/or depending on a distance or distances between a base station and one or more communication apparatuses and a range or ranges between the base station and on or more sensing targets.

Fig. 2 illustrates a general system model of an integrated sending and communication (ISAC) system 1 including a reconfigurable intelligent surface (RIS) 20, to which embodiments of the present disclosure may be applied. The system model comprises a base station (BS) 10, K communication apparatuses 30a, 30b, a RIS 20, and T targets 40a, 40b. The RIS 20 comprises a plurality of RIS elements 22. Although the system 1 is illustrated as comprising one RIS 20, the system 1 may comprise two or more RISs 20, each including a plurality of RIS elements 22. Further, the system 1 is illustrated as including K communication apparatuses 30a, 30b, the present disclosure is not limited thereto, and the system 1 may include one or more communication apparatuses 30a, 30b. Further, although the system 1 is illustrated as including T targets, the present disclosure is not limited thereto, and the system 1 may include one or more targets.

In the exemplary system model, the BS 10 includes M antennas, and the RIS 20 is composed of N reflecting RIS elements 22. The system comprises K communication apparatuses 30a, 30b, which may be user equipments (UEs), mobile stations, cell phones, or the like. Said communication apparatuses 30a, 30b may also be referred to as users. Further, the system 1 comprises T targets for sensing. (M, K, and T being integers equal to or larger than one; N being an integer equal to or larger than 4).

In the system model, a signal transmitted from the BS 10 may be expressed as $x = {W}_{c} {s}_{c} + {W}_{r} {s}_{r} = Ws$ (1)

In Equation (1), **W***_{c}* ∈ *C^{M×K}* and **W***ᵣ* ∈ C^{*M*×*T*} denote the communication beamforming matrix and the sensing (e.g. radar) beamforming matrix, respectively, **s***_{c}* ∈ C^{K×1} is the communication symbol, and **s***ᵣ* ∈ C^{T×1} is the sensing signal. The overall beamforming matrix is defined as [**W***_{c},* **W***ᵣ*] ∈ C^{*M*×(*T+K*)}*.*

As detailed above, the RIS elements 22 may perform a phase shift of the received signals, wherein a RIS phase shift matrix may be given as $Φ = diag \left(ϕ\right)$ (2) with [*ϕ*₁, *... , ϕ_{N}*]*^{T}* indicating each reflection response by the N RIS elements 22 as *ϕₙ = e^{jθₙ},* wherein *θₙ* represents the phase shift of the n-th RIS element 22.

The RIS phase shift matrix may be separated into two partitions, namely a RIS phase shift matrix for communication **Φ*_{c}***, including the reflection response of RIS elements 22 allocated for a communication operation, and a RIS phase shift matrix for sensing **Φ***ₜ*, including the reflection response of RIS elements 22 allocated for a sensing operation. For the communication part, the RIS phase shift matrix is given by ${Φ}_{c} = diag \left({ϕ}_{c}\right)$ (3) with ***ϕ**_{c}* = [*ϕ*₁, *... , ϕ_{N_{c}}*]*^{T}* representing the phase shifts applied to the RIS elements 22 allocated to communication. Similarly, for the sensing part, the RIS phase shift matrix is given by ${Φ}_{t} = diag \left({ϕ}_{t}\right)$ (4) with ***ϕₜ** =* [*ϕ*_{*N*_{c}*+*1}, *... , ϕ_{N}*]*^{T}* representing the phase shifts applied to the RIS elements 22 allocated to sensing.

That is, from the N RIS elements 22, a subset is allocated to the sensing operation and a different subset is allocated to the communication operation. In other words, each of the N RIS elements 22 may be allocated to the sensing operation or the communication operation. A parameter *α* (partition coefficient) may be utilized to describe said partitioning, wherein the partition coefficient *α* denotes the ratio of the number *N_{c}* of RIS elements 22 allocated to the communication operation and the number *Nₛ* of RIS elements 22 allocated to the sensing operation. Therefore, the number of RIS elements 22 allocated to the communication operation is given by *N_{c}* = $min \left(max\left(2, \left⌊Nα\right⌋\right),N\right)$ and the number of RIS elements (22) allocated to the sensing operation is given by *Nₛ = N - N_{c}.*

The channel from the BS 10 to the RIS 20 may be modelled as a Rician fading channel given by $G = \sqrt{L \left({d}_{RIS - BS}\right)} \left(\sqrt{\frac{κ}{κ + 1}}{a}_{RIS}\left({φ}_{RIS}, {ψ}_{RIS}\right){a}_{BS}^{T}\left({κ}_{t}\right)+\sqrt{\frac{1}{κ + 1}}{G}^{˜}\right)$ (5) with *d*_{RIS-BS} being the distance between the RIS 20 and the BS 10, and *κ* being the Rician factor. **G̃** ∈ *C*^{*N*×*M*} denotes the non-line of sight (NLoS) component, whose elements may be complex Gaussian random variables with zero mean and unitary variance.

Similarly to the partitioning of the RIS phase shift matrix, the Rician fading channel between the BS 10 and the RIS 20 (RIS-BS) may be partitioned into a RIS-BS channel for communication **G**_{comm} and a RIS-BS channel for sensing **G**_{radar}.

The partitioned RIS-BS channel for communication **G**_{comm} and the RIS-BS channel for sensing **G**_{radar} are given by ${G}_{comm} = G \left(1:{N}_{c},…\right)$ (6) ${G}_{radar} = G \left({N}_{c}+1:N,…\right)$ (7)

The notation **G**(1: *N_{c},* ...) and **G**(*N*_{c} + 1: *N*, ...) indicates the first *N*_{c} rows of the G matrix and rows *N_{c}* + 1 to *N* (i.e. the last *N_{S} = N - N_{C}* rows) of the G matrix, respectively.

The arrival array steering vector of the RIS 20, a_{RIS}(φ_{RIS}, ψ_{RIS}), is given by ${a}_{RIS} \left({φ}_{RIS}, {ψ}_{RIS}\right) = {\left[\begin{matrix}1 , ⋯ , {e}^{{jk}_{f} \left[\left(m-1\right){d}_{RIS} {sinφ}_{RIS} {cosψ}_{RIS}+\left(n-1\right){d}_{RIS} {sinφ}_{RIS} {sinψ}_{RIS}\right]} , … , \\ {e}^{{jk}_{f} \left[\left(\sqrt{N}-1\right){d}_{RIS} {sinφ}_{RIS} {cosψ}_{RIS}+\left(\sqrt{N}-1\right){d}_{RIS} {sinφ}_{RIS} {sinψ}_{RIS}\right]}\end{matrix}\right]}^{T}$ (8) with *d*_{RIS} being the RIS element spacing on the x-axis and y-axis, *k_{f}* being the free space propagation constant and *φ*_{RIS} and *ψ*_{RIS} being the angles of arrival (AoAs) for the RIS 20.

Further, the array steering vector of the BS 10, **a**_{BS}, is given by ${a}_{BS} \left({κ}_{t}\right) = {\left[1,…,{e}^{{jk}_{f} \left(j-1\right) {d}_{BS} sin \left({κ}_{t}\right)},…,{e}^{{jk}_{f} \left(M-1\right) {d}_{BS} sin \left({κ}_{t}\right)}\right]}^{T}$ (9) with *κₜ* being the angle of departure (AoD) for the BS 10 and *d*_{BS} being the antenna separation at the BS 10.

*L*(*d*) represents the path loss at the distance d, which is given by: $L \left(d\right) = {L}_{0} {\left(\frac{d}{{d}_{0}}\right)}^{- n} .$ (10)

Here, *L*₀ is the path loss at the reference distance *L*₀, and *n* is the path loss exponent.

Using the above considerations, the signal received by a user 30a, 30b can be expressed as ${y}_{c , k} = \left({h}_{d , k}^{T}+{h}_{r , k}^{T}{Φ}_{c}{G}_{comm}\right) x + {n}_{c , k}$ (11) where **h***_{d,k}* ∈ C^{*M*×1} represents the direct BS-user channel for the k-th user 30a, 30b, **h**_{*r*,*k*} ∈ C^{*N*_{c}×1} is the RIS-user channel for the k-th user 30a, 30b, whose elements are complex Gaussian random variables with zero mean and unity variance, and **G**_{comm} ∈ C^{*N*_{c}×*M*} is the RIS-BS channel for the communication signal. The noise at user k, *n_{c,k},* may be modeled as complex Gaussian noise with zero mean and ${σ}_{c}^{2}$ variance.

Accordingly, the signal to interference plus noise ratio (SINR), for the k-th user 30a, 30b, is given by ${γ}_{c , k} = \frac{{\left|\left({h}_{d , k}^{T}+{h}_{r , k}^{T}{Φ}_{c}{G}_{comm}\right){w}_{c}\right|}^{2}}{{\left|\left({h}_{d , k}^{T}+{h}_{r , k}^{T}{Φ}_{c}{G}_{comm}\right){w}_{r}\right|}^{2} + {σ}_{c , k}^{2}} .$ (12)

Further, the signal to noise ratio (SNR) of the sensing signal for the t-th target 40a, 40bis given by ${γ}_{s} = \frac{E \left\{{\left‖{H}_{t}W\right‖}^{2}\right\}}{{σ}^{2}} = \frac{Tr \left({W}^{H}{H}_{t}^{H}{H}_{t}W\right)}{{σ}^{2}}$ (13) where ${H}_{t} = \left({h}_{dt , t}+{G}_{radar}^{T}{Φ}_{t}{h}_{rt , t}\right) \left({h}_{dt , t}^{T}+{h}_{rt , t}^{T}{Φ}_{t}{G}_{radar}\right)$ represents the radar channel, σ² is the noise variance at the BS 10, **h***_{dt,t}* is the direct BS-target channel for t-th target, **h***_{rt,t}* represents the RIS-target channel for the t-th target 40a, 40b and **G**_{radar} E C^{*N*ₛ×*M*} represents the BS-RIS channel, which is partitioned based on the RIS element allocation for sensing.

When assuming that the sensing channels are line-of-sight (LoS) channels, as in radar sensing, it may be assumed that ${h}_{dt , t} = \sqrt{L \left({d}_{BS - t}\right)} {a}_{BS} \left({κ}_{t}\right)$ and ${h}_{rt , t} = \sqrt{L \left({d}_{RIS - t}\right)} {a}_{RIS , r , t} \left({ϕ}_{RIS , r , t}, {ψ}_{RIS , r , t}\right)$, where **a**_{RIS,r}(*ϕ*_{RIS,r,*t*}, *ψ*_{RIS,r,*t*}) ∈ C^{*N*ₛ×1} is the departure array steering vector of the RIS 20 for the t-th target 40a, 40b, similarly defined as in Equation (8) and *d*_{RIS-t} and *d*_{BS-t} are the distances from RIS 20 to target t 30 and from the BS 10 to target t 30, respectively.

### Embodiment 1

According to the embodiment, provided is an integrated sensing and communication, ISAC, system 1. The ISAC system 1 comprises a base station 10 that is configured to serve a communication apparatus 30a, 30b. The ISAC system 1 further comprises a reconfigurable intelligent surface, RIS, 20 having N RIS elements 22, wherein N is an integer equal to or larger than four. Further, the ISAC system comprises a control apparatus that is configured to determine, from among the N RIS elements 22, a number of sensing RIS elements for a sensing operation and/or a number of communication RIS elements for a communication operation. In this determination, the control apparatus uses a signal to noise ratio, SNR, of a radar signal from the base station 10 with respect to a target 40a, 40b, and a signal to interference plus noise ratio, SINR, of a communication channel between the base station 10 and the communication apparatus 30a, 30b. In addition or alternatively, the control apparatus may use, in said determination, a distance between the base station 10 and the communication apparatus 30a, 30b and a given range between the base station 10 and the target 40a, 40b.

For example, the ISAC system 1 may be an ISAC system 1 corresponding to the model system as illustrated in Fig. 1. However, the present disclosure is not limited thereto. In general, the ISAC system 1 may comprise, for instance, more than one RIS 20. The base station 10 may serve a single communication apparatus 30a, 30b or more than one communication apparatus 30a, 30b. Further, the sensing operation may be a sensing operation for detecting and/or determining the position of one target 40a, 40b or more than one target 40a, 40b.

In the ISAC system 1, the base station 10 plays a role in both communication and sensing tasks. It serves for managing data traffic and interactions with users (communication apparatuses 30a, 30b), such as smartphones, sensors, and/or loT devices. The base station 10 transmits and receives wireless signals using, for example, standard technologies like 4G, 5G, or Wi-Fi. To handle multiple users 30a, 30b efficiently, it may use techniques like MIMO (Multiple Input Multiple Output), which allows the base station 10 to send and receive multiple data streams at once, improving data speeds and coverage.

Beyond communication, the base station 10 may also function as a sensor. It may send out electromagnetic signals (sensing signals, radar signals) and then analyze the reflections of these signals as they bounce off the targets 40a, 40b in the environment. This process is similar to radar, allowing the base station 10 to detect and track targets 40a, 40b, estimate their position, and/or measure their speed.

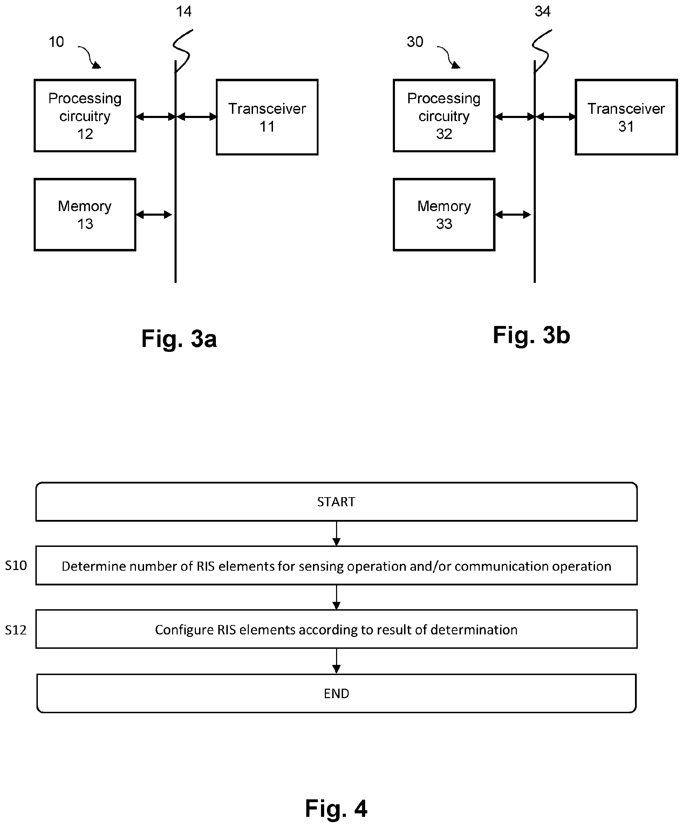

Fig. 3a is a block diagram illustrating a configuration of a base station 10 according to an embodiment. The base station 10 comprises processing circuitry 12, memory 13, and a transceiver 11. The processing circuitry 12, the memory 13, and the transceiver 11 may be connected to each other and communicate with each other via a communication bus 14. The processing circuitry 12 may control the memory 13 and the transceiver 11 to perform respective operations. For example, the processing circuitry 12 may execute a program stored on the memory to perform calculations, determinations, etc., and, in particular, to control the transceiver 11 to transmit and/or receive communication and/or sensing signals.

The transmission of communication signals by base station 10 to the communication apparatuses 30a, 30b is performed via the Reconfigurable Intelligent Surface (RIS) 20. The RIS 20 may be a surface made of many RIS elements 22 that can reflect and/or refract the signals in specific ways. These RIS elements 22 may be dynamically adjusted to alter the way signals interact therewith. For example, each RIS element 22 may adjust parameters like phase, amplitude, and/or polarization, allowing the RIS 20 to control how signals are reflected or refracted. The RIS 20 may be a passive or semi-active device, meaning it does not necessarily generate signals but instead modifies incoming signals to optimize communication and/or sensing performance.

More specifically, each RIS element 22 on the RIS 20 may adjust the phase of the signal it reflects, allowing the RIS 20 to control the direction, strength, and/or other properties of the reflected signals. The adjustments to the phases of the RIS elements 22 may be coordinated in real time to focus the signal toward specific locations, improve coverage in areas with poor reception, and/or reduce interference.

In the ISAC system 1, a RIS 20 is used to optimize communication and/or sensing. For communication, the RIS 20 may enhance signal strength and/or data rates by directing radio waves (communication signals) more efficiently toward the communication apparatuses 30a, 30b. In areas where signals might otherwise be blocked, such as behind walls or in areas with a lot of interference, the RIS 20 can reflect signals in ways that avoid obstacles or direct them toward the receiver more effectively. This may allow for improved coverage, particularly in complex environments like urban areas, dense buildings, or stadiums.

In a sensing operation, the RIS 20 can improve the accuracy of object detection and tracking. When the base station 10 in the ISAC system 1 is using radar-like sensing to detect targets 40a, 40b, the RIS 20 may be used to direct sensing signals toward specific areas or targets, ensuring that the reflected sensing signals are received with greater clarity. For example, in a smart city application where a base station 10 needs to monitor traffic flow or detect pedestrians, the RIS 20 may adjust the signal reflections to focus more precisely on the targets 40a, 40b, thereby enhancing the detection accuracy.

Each RIS element 22 may be allocated to the communication operation or to the sensing operation. In other words, each of the RIS elements 22 may serve the purpose of optimizing communication between the base station 10 and the communication apparatus 30a, 30b (communication RIS elements) or the purpose of optimizing the sensing operation of sensing targets 40a, 40b by the base station 10 using sensing signals (sensing RIS elements). The number of RIS elements 22 for the sensing operation may be equal to or larger than 2. The number of RIS elements 22 for the communication operation may be equal to or larger than 2. The total number of RIS elements 22 included in the RIS may be equal to or larger than 4.

The RIS 20 may be controlled by the control apparatus (not illustrated) that may be connected to the base station 10 and/or the RIS 20 in a wired or wireless manner. The control apparatus may perform the determinations of the number of communication RIS elements and/or the number of sensing RIS elements as described herein. The control apparatus may be an entity separate from the base station 10 and the RIS 20, or may be an entity included in the base station 10 and/or the RIS 20. For example, the control apparatus may be realized by the processing circuitry 12 of the base station 10 described above. However, the present disclosure is not limited thereto, and the control apparatus may be realized by processing circuitry of the RIS 20 and/or circuitry of a server, for example.

The control apparatus may send commands to adjust the individual RIS elements 22. These commands may be part of an optimization process, where the RIS 20 is dynamically reconfigured based on real-time data from the system, for example. The control apparatus may use certain algorithms to modify the RIS configuration in response to changing environmental conditions, such as interference or the presence of obstacles. For instance, if a blockage or signal degradation occurs in a particular area, the control apparatus may instruct the RIS 20 to redirect the signal and/or adjust its reflection pattern to maintain the best possible communication quality.

The control apparatus may be configured to configure the N RIS elements 22 to operate according to the sensing operation or the communication operation based on a result of the determination. In other words, the control apparatus may allocate each of the N RIS elements 22 to operate according to the sensing operation or the communication operation according to the determination. That is, based on the determination of the number of RIS elements for communication and the number of RIS elements 22 for sensing, the control apparatus may configured and/or control the RIS elements 22 accordingly.

Fig. 3b is a block diagram illustrating a configuration of a communication apparatus 30a, 30b. The communication apparatus 30a, 30b comprises processing circuitry 32, memory 33, and a transceiver 31. The processing circuitry 32, the memory 33, and the transceiver 31 may be connected to each other and communicate with each other via a communication bus 34. The processing circuitry 32 may control the memory 33 and the transceiver 31 to perform respective operations. For example, the processing circuitry 32 may execute a program stored on the memory 33 to perform calculations, determinations, etc., and, in particular to control the transceiver 31 to receive and/or transmit communication signals.

The processing circuitry 32 may a central processing unit (CPU) and/or specialized processors like the application processor (AP) and baseband processor, controls the device's operations. It handles tasks such as running applications, managing user inputs, and processing communication signals. The memory 33 may include volatile RAM, used for temporary data storage, and nonvolatile storage like flash memory, used for long-term data such as applications and user files. The transceiver 31 enables wireless communication by modulating and demodulating signals. It transmits data to and receives data from the base station 10 (e.g. via the RIS 20) through antennas. The communication bus 34 ensures efficient data transfer between these components, allowing them to work together seamlessly. For example, when making a phone call, the processing circuitry 32 may encode data, which the transceiver 31 transmits to the base station 10 (e.g. via the RIS). Simultaneously, the memory 33 may store relevant information like contacts or messages. The transceiver 31 may also receive signals, which are demodulated and passed to the processing circuitry 32 for further processing. This coordination between the processing circuitry 32, the memory 33, the transceiver 31, and the communication bus 34 ensures that the communication apparatus 30 can perform tasks like communication, data processing, and/or running applications effectively.

The targets 40a, 40b may refer to objects and/or devices that are detected and/or tracked. In the sensing operation, the targets 40a, 40b are physical objects like vehicles or pedestrians, detected using sensing signals like radar signals. The base station 10 may track their position, velocity, and/or movement, which may facilitate real-time analysis, like in autonomous driving or smart cities. These targets 40a, 40b could be detected through various sensing techniques such as radar, LiDAR, or vision-based systems, but in ISAC systems, radio signals and reflections may be used for this purpose.

In the present disclosure, a distance between a base station 10 and a communication apparatus 30a, 30b may be determined in various ways. One method is Time of Flight (ToF), where the base station 10 measures the time it takes for a signal to travel to the communication apparatus 30a, 30b and back. The round-trip time may be used to calculate the distance using the speed of light. Another technique is Time Difference of Arrival (TDOA), where the base station 10 measures the difference in arrival times of a signal from the communication apparatus 30a, 30b at multiple base stations. This time difference may facilitate calculating location of the communication apparatus 30a, 30b through triangulation. In Angle of Arrival (AoA), the base station 10 uses antenna arrays to determine the angle at which the signal arrives from the communication apparatus 30a, 30b. By combining the angle data with known base station positions, the distance can be estimated. Reference Signal Received Power (RSRP) is another method, where the base station 10 measures the signal strength of a reference signal sent by the communication apparatus 30a, 30b. Using path loss models, the distance can be approximated based on the received power. Finally, Round Trip Time (RTT) involves the communication apparatus 30a, 30b sending a signal to the base station 10, which then responds. The round-trip time is measured, and the distance is estimated using the signal propagation speed. These methods can be combined to improve accuracy. For example, TDOA and AoA might be used together to triangulate a more precise position, especially in challenging environments where one method alone might not provide sufficient accuracy.

Regarding the range between the base station 10 and the targets 40a, 40b, it is to be noted that the distance is not necessarily known, but may be a measure intended to be determined in the sensing operation. For this reason, the range between the base station 10 and a target 40a, 40b may be assumed in the sense that the range is set to a desired sensing range. Therefore, the control apparatus may determine a range as an intended target sensing range and use said range in the determination of the number of sensing RIS elements and communication RIS elements.

In order to improve communication and sensing in the ISAC system, an object may be that the sum radar SNR be maximized while at the same time it is ensured that the communication SINR meets a given threshold Γ. In the exemplary system model, such an optimization problem may be formulated as ${max}_{W , Φ , α} {\sum }_{t = 1}^{T} {γ}_{s , t}$ (14) such that ${γ}_{c , k} \geq Γ , k = 1 , 2 , … , K$ (15) ${\left‖W\right‖}_{F}^{2} \leq {P}_{max}$ (16) $0 \leq {θ}_{n} \leq 2 π , ∀ n ∈ \left\{1,2,…,N\right\}$ (17) $0 < α < 1$ (18) with *P*ₘₐₓ being a maximum power of the signals transmitted by the base station 10.

In an implementation, the control apparatus may optimize a beamforming matrix ***W*** to maximize SNR, and optimize RIS reflection coefficients ***ϕ*** to maximize SNR.

For example, the optimization may include a beamforming optimization, wherein the beamforming matrix **W** is set so as to maximize the radar SNR while the communication SINR constraint is maintained, and the maximum power budget is respected. For a given random **Φ**, the optimization problem may be formulated as described in detail in Luo *et al.*: ${max}_{W} Tr \left({W}^{H}{C}_{1}W\right)$ (19) $\left(1+{Γ}^{- 1}\right) {{h}_{k}}^{T} {w}_{c} {w}_{c}^{H} {h}_{k} * \geq {{h}_{k}}^{T} {WW}^{H} {h}_{k} * + {σ}_{c}^{2}$ (20) ${\left‖W\right‖}_{F}^{2} \leq {P}_{max}$ (21) with Γ being the communication threshold. Equation (21) represents the total transmit power constraint, and the combined channel from the base station to a communication apparatus, denoted by **h***ₖ*, is given as ${h}_{k} = {h}_{d , k} + {G}_{comm}^{T} {Φ}_{c} {h}_{r , k}$ (22) with **C**₁ being defined as ${C}_{1} = {\sum }_{t = 1}^{T} \frac{{H}_{t}^{H} {H}_{t}}{{σ}^{2}}$ (23)

This problem is formulated as a non-convex quadratically constrained quadratic programming (QCQP) problem, which may be solved using a majorization-minimization (MM) and second order cone programming (SOCP) for the constraints given in Equation (20), as detailed by Luo *et al.* Further, for example, the optimization may include a RIS phase shift optimization, wherein, given the optimized beamforming matrix **W,** the RIS reflection coefficients ***ϕ*** may be optimized to enhance the radar SNR. The optimization problem may be formulated, as detailed by Luo *et al.*, as ${max}_{ϕ} vec {\left({H}_{t}\right)}^{H} {C}_{2} vec \left({H}_{t}\right)$ (24) $\frac{\left|{{h}_{k}}^{H}{w}_{c}\right|}{\left|{{h}_{k}}^{H}{w}_{r}\right| + {σ}_{c}^{2}} \geq Γ$ (25) $\left|{ϕ}_{n}\right| = 1 , n ∈ \left\{1,2,…,N\right\}$ (26)

Here, **C**₂ = ((**W*****W***^{T}*) ⊗ **I**)/σ² is the radar channel weight for the target. The constraint in Equation (26) ensures that the reflection coefficients are unit-modulus, as it may be typical for phase shifters used in RIS systems.

This optimization problem may be solved using the Riemann conjugate gradient (RCG) algorithm that updates the reflection coefficient iteratively until convergence is achieved, thereby maximizing the radar SNR and fulfilling the communication SINR constraints.

An exemplary and non-limiting algorithm for beamforming and reflection optimization is outlined in the following (referred to as "Algorithm 1"). As an input to this algorithm, the partitioning parameter α is used. During initialization, the initial RIS phase shift is randomly given **Φ,** and **W** is optimized using the above-described SOCP method. Further, for the optimized **W, Φ** is optimized using above-described MM and Riemann optimization methods. The steps of **W** optimization and **Φ** optimization may be repeated until a certain convergence criterion is met. Said criterion may be pre-determined, predefined, specified, or set according to requirements.

Fig. 4 illustrates the steps of a method according to an embodiment. The steps of the method may be performed by the control apparatus, for example the processing circuitry 12 of the base station 10. The illustrated method is a method for an integrated sensing and communication, ISAC, system 1 a including a base station 10 configured to serve a communication apparatus 30a, 30b and a reconfigurable intelligent surface, RIS, 20 having N RIS elements 22, wherein N is an integer equal to or larger than four. In step S10, a number of sensing RIS elements for a sensing operation and/or a number of communication RIS elements for a communication operation are determined, from among the N RIS elements 22. In the determination, a signal to noise ratio, SNR, of a radar signal from the base station 10 with respect to a target 40a, 40b, and a signal to interference plus noise ratio, SINR, of a communication channel between the base station 10 and the communication apparatus 30a, 30b, and/or a distance between the base station 10 and the communication apparatus 30a, 30b and a given range between the base station 10 and the target 40a, 40b are used.

In the following, two specific implementations for the determination of the partition coefficient α, hence the determination of the number of communication RIS elements and the number of communication RIS elements, are described in the framework of embodiments 2 and 3. Said embodiments may be combined with each other and, in particular, with embodiment 1, in a sense that embodiments 2 and 3 describe implementations of the general concept of the present disclosure as described in the framework of embodiment 1.

### Embodiment 2

In embodiment 2, the control apparatus is configured to determine the number of sensing RIS elements and/or the number of communication RIS elements using a mean of distances between the base station 10 and multiple communication apparatuses 30a, 30b, if the base station 10 serves more than one communication apparatus 30a, 30b.

In other words, when the base station 10 serves one communication apparatus 30a, 30b, the distance between the base station 10 and said communication apparatus 30a, 30b is utilized in the determination of the number of RIS elements 22 for communication and the number of RIS elements for sensing. On the other hand, when the base station 10 serves multiple communication apparatuses 30a, 30b, the mean distance from the base station 10 to said communication apparatuses 30a, 30b is used. However, the present disclosure is not limited thereto, and the base station may use a distance to a certain communication apparatus from among a plurality of communication apparatuses 30a, 30b served by the base station 10. More generally, from among a plurality of communication apparatuses 30a, 30b served by the base station 10, the control apparatus may use a mean of distances between the base station 10 and a certain subset of the plurality of communication apparatuses 30a, 30b served by the base station 10. The certain communication apparatus or the certain subset of communication apparatuses 30a, 30b may be determined according to sensing and/or communication requirements. For example, the determination of RIS elements for sensing and for communication may be performed considering communication apparatuses 30a, 30b that serve as, for example, target communication apparatuses.

Similarly, in embodiment 2, the control apparatus may be configured to determine the number of sensing RIS elements and/or the number of communication RIS elements using a mean of ranges between the base station 10 and multiple targets 40a, 40b.

In other words, the control apparatus may determine one or more target ranges and utilize a mean of said target ranges for the determination of the RIS elements for communication and sensing. The target ranges may be set according to sensing requirements and may be, for example, ranges at which a target is expected or ranges at which the detection of targets 40a, 40b is intended. However, the present disclosure is not limited thereto, and if there is only one target or one target range, the control apparatus may utilized said range.

The control apparatus may be configured to determine the number of sensing RIS elements to be larger than the number of communication RIS elements if a mean of distances between the base station 10 and multiple communication apparatuses 30a, 30b is less than a mean of ranges between the base station 10 and multiple targets 40a, 40b. Accordingly, the control apparatus may be configured to determine the number of communication RIS elements to be larger than the number of sensing RIS elements if a mean of ranges between the base station 10 and multiple targets 40a, 40b is less than a mean of distances between the base station 10 and multiple communication apparatuses 30a, 30b.

In a specific non-limiting implementation of embodiment 2, the control apparatus may be configured to set a partition coefficient *α* as $α = \left\{\begin{matrix}\frac{\overline{{d}_{BS - u}}}{\overline{{d}_{BS - u}} + \overline{{d}_{BS - t}}} , \overline{{d}_{BS - u}} < \overline{{d}_{BS - t}} \\ 1 - \frac{\overline{{d}_{BS - u}}}{\overline{{d}_{BS - u}} + \overline{{d}_{BS - t}}} , otherwise\end{matrix}\right. ,$ (27) wherein the number of communication RIS elements is *N_{c} = αN,* the number of sensing RIS elements is *Nₛ = N - N_{c}, d̅_̅{̅B̅S̅-̅u̅}̅* denotes a mean of distances between the base station 10 and multiple communication apparatuses 30a, 30b, and *d̅_̅{̅B̅S̅-̅t̅}̅* denotes a mean of ranges between the base station 10 and multiple targets 40a, 40b.

The partition coefficient *α* determines the allocation of RIS elements 22 between communication and sensing, wherein it is ensured that the number of communication RIS elements is less than the number of sensing RIS elements when the mean distance to the communication apparatuses 30a, 30b is less than the mean range to the targets 40a, 40b. Similarly, it is ensured that the number of communication RIS elements is larger than the number of sensing RIS elements when the mean distance to the communication apparatuses 30a, 30b is larger than the mean range to the targets 40a, 40b.

It goes without saying that, if the calculated number of communication and/or sensing RIS elements according to the determined partition coefficient are not integer values, rounding may be performed.

Further, when having determined the partition coefficient *α*, beamforming and reflection optimization may be performed, for instance, as described in Algorithm 1.

### Embodiment 3

In embodiment 3, the partition coefficient *α* is dynamically adjusted based on the SINR of one or more communication apparatuses 30a, 30b and a require SINR for one or more targets 40a, 40b. In a sensing-centric approach, sensing may be prioritized by allocating more RIS elements 22 to the sensing operation while at the same time a required SINR for one or more communication apparatus 30a, 30b is met.

The control apparatus is configured to determine the number of the sensing RIS elements and/or the number of communication RIS elements by performing an iterative algorithm using the SNR and the SINR.

This iterative algorithm may involve, in each iteration, the optimization of the beamforming matrix ***W*** to maximize SNR, and the optimization of the RIS reflection coefficients ***ϕ*** to maximize SNR. This may be performed, for instance, as described in Algorithm 1.

Further, when determining the partition coefficient *α*, a minimum SNR *γ*_{*s*ₘᵢₙ} of radar signals from the base station 10 with respect to one or more targets 40a, 40b may be determined. Further, a maximum SINR *γ*_{*c*ₘₐₓ} of communication channels between the base station 10 and one or more communication apparatuses 30a, 30b is determined. Using these values, the partition coefficient may be set as $α = \frac{{{γ}_{s}}_{{min}_{}} {κ}_{a}}{{γ}_{{s}_{min}} {κ}_{a} + {γ}_{{c}_{max}}} .$ (28)

Here, *κₐ* is a parameter inverse proportional to a total transmit power *P*ₘₐₓ of the base station 10.

After each iteration, it may be determined whether the iterative algorithm has converged. For example, this may be performed by comparing a difference between an objective function of a current iteration and an objective function of a previous iteration with a threshold.

The threshold may be pre-determined, preconfigured, specified, or set according to communication and/or sensing requirements, for example.

The objective function Obj of an iteration may be given by $Obj = {\left(\left(1-α\right){γ}_{{s}_{min}}+{αγ}_{{c}_{max}}\right)}^{2} .$ (29)

In the following, a detailed algorithm (referred to as "Algorithm 2") is described for determining the number of communication RIS elements and the number of sensing RIS elements using an iterative approach.

As an initialization, the partition coefficient *α* may be set to a predetermined number, e.g. 0.5. Alternatively, the partition coefficient *α* may be determined as described in embodiment 2. Further, a maximum number of iterations and the threshold may be set. The maximum number of iterations as well as the threshold may be predetermined, pre-configured, specified, or determined according to requirements, e.g. of the communication operation, the sensing operation, accuracy, system requirements, or the like. For example, the maximum number of iterations may be set to 10 and the threshold value may be set to 0.005. However, the present disclosure is not limited to said specific numerical values, which may be set differently.

In a first step, for a given partition coefficient *α* (the initial partition coefficient or a partition coefficient determined in a previous iteration), ***W*** and ***ϕ*** are optimized, e.g. as in Algorithm 1. Subsequently, in a second step, the minimum sensing SNR *γ*_{*s*ₘᵢₙ} and the maximum communication SINR *γ*_{*c*ₘₐₓ} are calculated. Further, *κₐ* is set. *κₐ* may be set to a value of 10⁴/Pₘₐₓ. However, the present disclosure is not limited to said particular numerical value, and *κₐ* may be set differently, e.g. depending on the specific implementation and requirements.

In a third step, the partition coefficient *α* is updated. In the embodiment, the partition coefficient is updated according to Equation (28). Based on the calculated partition coefficient, the value of the objective function Obj is determined according to Equation (29) in a fourth step.

Then, in step five, it is determined whether the convergence criterion is met. This is performed by comparing the value of the objective function with a value of the objective function in the previous iteration. If the difference of said values are below the convergence threshold, the algorithm is ended and the latest partition coefficient *α* is output. On the other hand, if the convergence criterion is not met, the next iteration is started, using the determined partition coefficient *α*.

The number of communication RIS elements and the number of sensing RIS elements may be determined according to the value of the output partition coefficient *α*. It goes without saying that, if the calculated number of communication and/or sensing RIS elements according to the determined partition coefficient are not integer values, rounding may be performed.

### Advantages achieved by the present disclosure

Using the above-described approaches for determination of the partition coefficient *α* (and, hence, the number of communication RIS elements and the number of sensing RIS elements), simulation evaluations have been performed assuming a system model as illustrated in Fig. 1. Further, the parameters for said simulation evaluations were set as summarized in Table 1.

**Table 1: System parameters**

| **Parameter** | **Value** |
|---|---|
| Carrier frequency (*f_{c}*) | 2.4 GHz |
| ${σ}^{2} = {σ}_{c}^{2}$ | -80 dBm |
| Distance between RIS 20 and base station 10 | 20 m |
| Maximum distance between RIS 20 and communication apparatuses 30a, 30b | 10 m |
| Location of the RIS 20 in terms of the azimuth angle from the base station 10 | 0 degrees |
| Location of the targets 40a, 40b in terms of the azimuth angle from the base station 10 | -30, 0, 30 degrees |
| Distance between the base station 10 and the targets 40a, 40b | 60, 65, 70 m |
| Element spacing in the base staion 10 (*d_{BS}*) and the RIS 20 (*d_{RIS}*) | $\frac{λ}{2}$ (*λ* being the wavelength) |
| Reference distance | *d*₀ = 1 m |
| Pathloss at reference distance | -30 dB |
| Pathloss exponent of BS-RIS link (*n_{BR}*) | 2 |
| Pathloss exponent of RIS-target link (*n_{Rt}*) | 2.3 |
| Pathloss exponent of RIS-user link (*n_{Ru}*) | 2.4 |
| Pathloss exponent of BS-target link (*n_{Bt}*) | 2.7 |
| Pathloss exponent of BS-user link (*n_{Bu}*) | 2.7 |
| Variance of the radar cross section (RCS) ( ${σ}_{RCS}^{2}$) | 0 dB |
| Rician factor (*κ*) | 10dB |

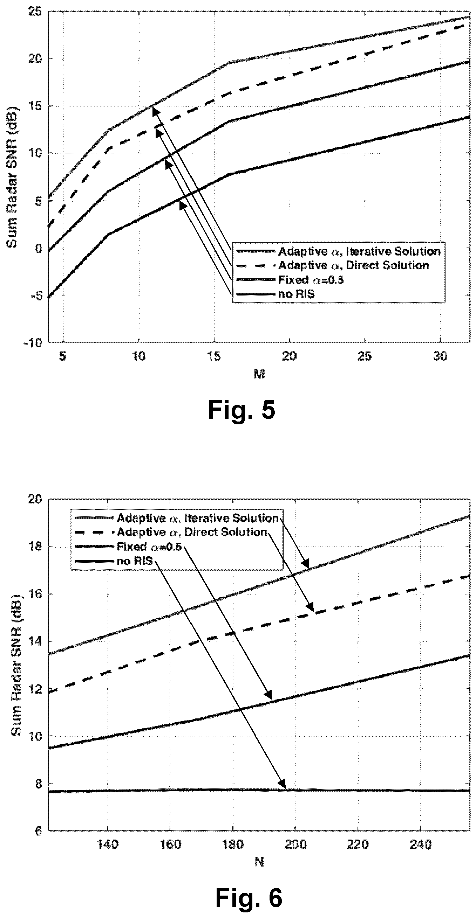

The performance results are shown for the radar SNR versus transmit power and the number of RIS elements in Figs. 5 and 6, respectively.

Fig. 5 is a graph illustrating a sum of radar SNR versus a number M of antennas at the BS 10 for exemplary implementations of the present disclosure and comparative examples. For calculation of the illustrated sum of radar SNR, the total number of RIS elements 22 of the RIS 20 was set to *N* = 256, the maximum power at the BS was set to *P*ₘₐₓ = 45 dBm, the threshold was set to Γ = 10*dB,* the number of targets 40a, 40b was set to *T* = 3, and the number of communication apparatuses 30a, 30b was set to *K* = 4.

Fig. 6 is a graph illustrating a sum of radar SNR versus a number N of RIS elements for exemplary implementations of the present disclosure and comparative examples. For calculation of the illustrated sum of radar SNR, the number of antennas of the base station 10 as set to *M* = 16, the total transmit power was set to *P =* 10 *dB,* the threshold was set to Γ = 10*dB,* the number of targets 40a, 40b was set to *T* = 3, and the number of communication apparatuses 30a, 30b was set to *K* = 4.

In each of Fig. 5 and Fig. 6, the performance of two comparative examples is also illustrated, namely for a partition coefficient set to a fixed value of *α* = 0.5 and for a system not including a RIS 20.

As can be seen from Fig. 5 and 6, the approach of the present disclosure outperforms both the approach using a fixed *α* and the system without an RIS 20. In the comparative example with *α =* 0.5, the number of RIS elements 20 set for the communication operation is equal to the number of RIS elements 20 set for the sensing operation. Further, setting the partition coefficient using the iterative approach of embodiment 3 provides an even more improved performance than the approach of embodiment 2.

As can be seen from Fig. 6, as the number of total RIS elements increases, the approach of the present disclosure significantly exceeds the comparative examples. Additionally, the iterative algorithm of embodiment 3 provides further gain of radar SNR compared to the direct solution of embodiment 2.

Summarizing, in an ISAC system 1 supported by RIS 20, the approach of the present disclosure represents an effective solution for optimization of the performance of communication and sensing simultaneously. With the dynamic RIS element allocation approach, resource sharing may be adjusted based on the SINR of a communication apparatus 30a, 30b and radar SNR for the target 40a, 40b. The proposed approach offers a more flexible and effective solution compared to a fixed allocation method by improving the radar SNR while satisfying the communication SINR. This integration provides superior performance in radar sensing compared to traditional methods, while also increasing applicability, especially in areas where real-time communication and sensing are critical, such as smart cities, autonomous vehicles and industrial loT.

### Implementations in software and hardware

The methodologies described herein may be implemented by various means depending on the application. For example, these methodologies may be implemented in hardware, operation system, firmware, software, or any combination of two or all of them. For a hardware implementation, any processing circuitry may be used, which may include one or more processors. For example, the hardware may include one or more of application-specific integrated circuits (ASICs), digital signal processors (DSPs), digital signal processing devices (DSPDs), programmable logic devices (PLDs), field-programmable gate arrays (FPGAs), processors, controllers, any electronic devices, or other electronic circuitry units or elements designed to perform the functions described above.

If implemented as program code, the functions performed by the transmitting apparatus (device) may be stored as one or more instructions or code on a non-transitory computer-readable storage medium or any other type of storage. The computer-readable media includes physical computer storage media, which may be any available medium that can be accessed by the computer, or, in general by the processing circuitry. Such computer-readable media may comprise RAM, ROM, EEPROM, optical disk storage, magnetic disk storage, semiconductor storage, or other storage devices. Some particular and non-limiting examples include compact disc (CD), CD-ROM, laser disc, optical disc, digital versatile disc (DVD), Blu-ray (BD) disc, or the like. Combinations of different storage media are also possible - in other words, distributed and heterogeneous storage may be employed.

The embodiments and exemplary implementations mentioned above show some non-limiting examples. It is understood that various modifications may be made without departing from the claimed subject-matter. For example, modifications may be made to adapt the examples to new systems and scenarios without departing from the central concept described herein.

### Selected embodiments and examples

Summarizing, apparatuses, systems, methods and techniques are described for an integrated sensing and communication, ISAC, system, making use of a signal to noise ratio of a radar signal or a distance between a base station and a communication apparatus and a given range between the base station and a target to determine a number of RIS elements for sensing and/or a number of RIS elements for communication.

According to a first aspect, provided is an integrated sensing and communication, ISAC, system, comprising a base station configured to serve a communication apparatus; a reconfigurable intelligent surface, RIS, having N RIS elements, wherein N is an integer equal to or larger than four; and a control apparatus configured to determine, from among the N RIS elements, a number of sensing RIS elements for a sensing operation and/or a number of communication RIS elements for a communication operation using a signal to noise ratio, SNR, of a radar signal from the base station with respect to a target, and a signal to interference plus noise ratio, SINR, of a communication channel between the base station and the communication apparatus, and/or a distance between the base station and the communication apparatus and a given range between the base station and the target.

In an exemplary and non-limiting embodiment, the control apparatus is configured to determine the number of sensing RIS elements and/or the number of communication RIS elements using a mean of distances between the base station and multiple communication apparatuses, if the base station serves more than one communication apparatus.

In an exemplary and non-limiting embodiment, the control apparatus is configured to determine the number of sensing RIS elements and/or the number of communication RIS elements using a mean of ranges between the base station and multiple targets.

In an exemplary and non-limiting embodiment, the control apparatus is configured to determine the number of sensing RIS elements to be larger than the number of communication RIS elements if a mean of distances between the base station and multiple communication apparatuses is less than a mean of ranges between the base station and multiple targets; and the control apparatus is configured to determine the number of communication RIS elements to be larger than the number of sensing RIS elements if a mean of ranges between the base station and multiple targets is less than a mean of distances between the base station and multiple communication apparatuses.

In an exemplary and non-limiting embodiment, the control apparatus is configured to set a partition coefficient *α* as $α = \left\{\begin{matrix}\frac{\overline{{d}_{BS - u}}}{\overline{{d}_{BS - u}} + \overline{{d}_{BS - t}}} , \overline{{d}_{BS - u}} < \overline{{d}_{BS - t}} \\ 1 - \frac{\overline{{d}_{BS - u}}}{\overline{{d}_{BS - u}} + \overline{{d}_{BS - t}}} , otherwise\end{matrix}\right.$, wherein the number of communication RIS elements is *N_{c} = αN*, wherein the number of sensing RIS elements is *Nₛ = N - N_{c},* wherein *d̅_̅{̅B̅S̅-̅u̅}̅* denotes a mean of distances between the base station and multiple communication apparatuses, and wherein *d̅_̅{̅B̅S̅-̅t̅}̅* denotes a mean of ranges between the base station and multiple targets.

In an exemplary and non-limiting embodiment, the control apparatus is configured to determine the number of the sensing RIS elements and/or the number of communication RIS elements by performing an iterative algorithm using the SNR of radar signal and the SINR of communication apparatus.

In an exemplary and non-limiting embodiment, the iterative algorithm involves, in each iteration, optimizing a beamforming matrix ***W*** to maximize SNR; and optimizing RIS reflection coefficients ***ϕ*** to maximize SNR.

In an exemplary and non-limiting embodiment, the iterative algorithm involves, in each iteration, calculating the number of communication RIS elements *N_{c} = αN*; and calculating the number of sensing RIS elements *Nₛ = N - N_{c}.*

In an exemplary and non-limiting embodiment, the iterative algorithm involves, in each iteration, determining a minimum SNR *γ*_{*s*ₘᵢₙ} of radar signals from the base station with respect to one or more targets; determining a maximum SINR *γ*_{*c*ₘₐₓ} of communication channels between the base station and one or more communication apparatuses; and setting the partition coefficient as *α* = $\frac{{{γ}_{s}}_{{min}_{}} {κ}_{a}}{{γ}_{{s}_{min}} {κ}_{a} + {γ}_{{c}_{max}}}$, wherein *κₐ* is a parameter inverse proportional to a total transmit power *P*ₘₐₓ of the base station.

In an exemplary and non-limiting embodiment, the iterative algorithm involves, in each iteration, determining whether the iterative algorithm has converged by comparing a difference between an objective function of a current iteration and an objective function of a previous iteration with a threshold.

In an exemplary and non-limiting embodiment, the iterative algorithm involves, in each iteration, determining a convergence point of the iterative algorithm by comparing a difference between an objective function of a current iteration and an objective function of a previous iteration with a threshold.

In an exemplary and non-limiting embodiment, the objective function Obj of an iteration is given by Obj = (1 - *α*)*γ*_{*s*ₘᵢₙ} + *αγ*_{*c*ₘₐₓ})².

In an exemplary and non-limiting embodiment, the control apparatus is configured to configure the N RIS elements to operate according to the sensing operation or the communication operation based on a result of the determination.

In an exemplary and non-limiting embodiment, the control apparatus is configured to allocate the N RIS elements to the sensing operation or the communication operation based on a result of the determination.

In an exemplary and non-limiting embodiment, the control apparatus is configured to allocate each of the N RIS elements to one of the sensing operation and the communication operation based on a result of the determination.

According to a second aspect, provided is a method for an integrated sensing and communication, ISAC, system including a base station configured to serve a communication apparatus and a reconfigurable intelligent surface, RIS, having N RIS elements, wherein N is an integer equal to or larger than four, the method comprising determining, from among the N RIS elements, a number of sensing RIS elements for a sensing operation and/or a number of communication RIS elements for a communication operation using a signal to noise ratio, SNR, of a radar signal from the base station with respect to a target, and a signal to interference plus noise ratio, SINR, of a communication channel between the base station and the communication apparatus, and/or a distance between the base station and the communication apparatus and a given range between the base station and the target.

In an exemplary and non-limiting embodiment, the number of sensing RIS elements and/or the number of communication RIS elements are determined using a mean of distances between the base station and multiple communication apparatuses, if the base station serves more than one communication apparatus.

In an exemplary and non-limiting embodiment, the number of sensing RIS elements and/or the number of communication RIS elements are determined using a mean of ranges between the base station and multiple targets.

In an exemplary and non-limiting embodiment, the number of sensing RIS elements is determined to be larger than the number of communication RIS elements if a mean of distances between the base station and multiple communication apparatuses is less than a mean of ranges between the base station and multiple targets; and the number of communication RIS elements is determined to be larger than the number of sensing RIS elements if a mean of ranges between the base station and multiple targets is less than a mean of distances between the base station and multiple communication apparatuses.

In an exemplary and non-limiting embodiment, the method comprises setting a partition coefficient *α* as $α = \left\{\begin{matrix}\frac{\overline{{d}_{BS - u}}}{\overline{{d}_{BS - u}} + \overline{{d}_{BS - t}}} , \overline{{d}_{BS - u}} < \overline{{d}_{BS - t}} \\ 1 - \frac{\overline{{d}_{BS - u}}}{\overline{{d}_{BS - u}} + \overline{{d}_{BS - t}}} , otherwise\end{matrix}\right.$, wherein the number of communication RIS elements is *N_{c} = αN*, wherein the number of sensing RIS elements is *Nₛ = N - N_{c},* wherein *d̅_̅{̅B̅S̅-̅u̅}̅* denotes a mean of distances between the base station and multiple communication apparatuses, and wherein *d̅_̅{̅B̅S̅-̅t̅}̅* denotes a mean of ranges between the base station and multiple targets.

In an exemplary and non-limiting embodiment, the number of the sensing RIS elements and/or the number of communication RIS elements are determined by performing an iterative algorithm using the SNR and the SINR.

In an exemplary and non-limiting embodiment, the iterative algorithm involves, in each iteration, optimizing a beamforming matrix ***W*** to maximize SNR; and optimizing RIS reflection coefficients ***ϕ*** to maximize SNR.

In an exemplary and non-limiting embodiment, the iterative algorithm involves, in each iteration, calculating the number of communication RIS elements *N_{c} = αN*; and calculating the number of sensing RIS elements *Nₛ = N - N_{c}.*

In an exemplary and non-limiting embodiment, the iterative algorithm involves, in each iteration, determining a minimum SNR *γ*_{*s*ₘᵢₙ} of radar signals from the base station with respect to one or more targets; determining a maximum SINR *γ*_{*c*ₘₐₓ} of communication channels between the base station and one or more communication apparatuses; and setting the partition coefficient as *α* = $\frac{{γ}_{{s}_{min}} {κ}_{a}}{{γ}_{{s}_{min}} {κ}_{a} + {γ}_{{c}_{max}}}$, wherein *κₐ* is a parameter inverse proportional to a total transmit power *P*ₘₐₓ of the base station.

In an exemplary and non-limiting embodiment, the iterative algorithm involves, in each iteration, determining whether the iterative algorithm has converged by comparing a difference between an objective function of a current iteration and an objective function of a previous iteration with a threshold.

In an exemplary and non-limiting embodiment, the iterative algorithm involves, in each iteration, determining a convergence point of the iterative algorithm by comparing a difference between an objective function of a current iteration and an objective function of a previous iteration with a threshold.

In an exemplary and non-limiting embodiment, the objective function Obj of an iteration is given by Obj = (1 - *α*)*γ*_{*s*ₘᵢₙ} + *αγ*_{*c*ₘₐₓ})².

In an exemplary and non-limiting embodiment, the method comprises configuring the N RIS elements to operate according to the sensing operation or the communication operation based on a result of the determination.

In an exemplary and non-limiting embodiment, the method comprises configuring each of the N RIS elements to operate according to one of the sensing operation and the communication operation based on a result of the determination.

In an exemplary and non-limiting embodiment, the method comprises allocating the N RIS elements to the sensing operation or the communication operation based on a result of the determination.

In an exemplary and non-limiting embodiment, the method comprises allocating each of the N RIS elements to one of the sensing operation and the communication operation based on a result of the determination.

According to a third aspect, provided is a non-transient computer-readable storage medium comprising instructions which, when executed by a computer, cause the computer to carry out the steps of any one of the methods described herein, in particular the second aspect and/or its embodiments.

According to a fourth aspect, provided is a computer program comprising instructions, which, when the program is executed by a computer, cause the computer to carry out the steps of any one of the methods described above, in particular the second aspect and/or its embodiments.

Any of the apparatuses of the present disclosure may be embodied on an integrated chip.

Any of the above-mentioned embodiments and exemplary implementations may be combined.

Although the disclosed subject-matter has been described in detail for the purpose of illustration based on what is currently considered to be the most practical and preferred embodiments, it is to be understood that such detail is solely for that purpose and that the disclosed subject-matter is not limited to the disclosed embodiments, but, on the contrary, is intended to cover modifications and equivalent arrangements that are within the scope of the appended claims. For example, it is to be understood that the presently disclosed subject-matter contemplates that, to the extent possible, one or more features of any embodiment can be combined with one or more features of any other embodiment.

## Claims

1. An integrated sensing and communication, ISAC, system, comprising
a base station configured to serve a communication apparatus;
a reconfigurable intelligent surface, RIS, having N RIS elements, wherein N is an integer equal to or larger than four; and
a control apparatus configured to determine, from among the N RIS elements, a number of sensing RIS elements for a sensing operation and/or a number of communication RIS elements for a communication operation using
• a signal to noise ratio, SNR, of a radar signal from the base station with respect to a target, and a signal to interference plus noise ratio, SINR, of a communication channel between the base station and the communication apparatus, and/or
• a distance between the base station and the communication apparatus and a given range between the base station and the target.

2. The ISAC system according to claim 1, wherein
the control apparatus is configured to determine the number of sensing RIS elements and/or the number of communication RIS elements using a mean of distances between the base station and multiple communication apparatuses, if the base station serves more than one communication apparatus.

3. The ISAC system according to claim 1 or 2, wherein
the control apparatus is configured to determine the number of sensing RIS elements and/or the number of communication RIS elements using a mean of ranges between the base station and multiple targets.

4. The ISAC system according to any one of claims 1 to 3, wherein
the control apparatus is configured to determine the number of sensing RIS elements to be larger than the number of communication RIS elements if a mean of distances between the base station and multiple communication apparatuses is less than a mean of ranges between the base station and multiple targets; and
the control apparatus is configured to determine the number of communication RIS elements to be larger than the number of sensing RIS elements if a mean of ranges between the base station and multiple targets is less than a mean of distances between the base station and multiple communication apparatuses.

5. The ISAC system according to any one of claims 1 to 4, wherein
the control apparatus is configured to set a partition coefficient *α* as $α = \left\{\begin{matrix}\frac{\overline{{d}_{BS - u}}}{\overline{{d}_{BS - u}} + \overline{{d}_{BS - t}}} , \overline{{d}_{BS - u}} < \overline{{d}_{BS - t}} \\ 1 - \frac{\overline{{d}_{BS - u}}}{\overline{{d}_{BS - u}} + \overline{{d}_{BS - t}}} , otherwise\end{matrix}\right. ,$
wherein the number of communication RIS elements is *N_{c} = αN*,
wherein the number of sensing RIS elements is *Nₛ = N - N_{c}*,
wherein *d̅_̅{̅B̅S̅-̅u̅}̅* denotes a mean of distances between the base station and multiple communication apparatuses, and
wherein *d̅_̅{̅B̅S̅-̅t̅}̅* denotes a mean of ranges between the base station and multiple targets.

6. The ISAC system according to claim 1, wherein
the control apparatus is configured to determine the number of the sensing RIS elements and/or the number of communication RIS elements by performing an iterative algorithm using the SNR of radar signals and the SINR of communication apparatus.

7. The ISAC system according to claim 6, wherein the iterative algorithm involves, in each iteration,
optimizing a beamforming matrix ***W*** to maximize SNR for a randomly generated RIS reflection coefficients ***ϕ*;** and
optimizing RIS reflection coefficients ***ϕ*** for a given a beamforming matrix ***W*** to maximize SNR.

8. The ISAC system according to claim 6 or 7, wherein the iterative algorithm involves, in each iteration,
calculating the number of communication RIS elements *N_{c} = αN*; and
calculating the number of sensing RIS elements *Nₛ = N - N_{c}.*

9. The ISAC system according to claim 8, wherein the iterative algorithm involves, in each iteration,
determining a minimum SNR *γ*_{*s*ₘᵢₙ} of radar signals from the base station with respect to one or more targets;
determining a maximum SINR *γ*_{cₘₐₓ} of communication channels between the base station and one or more communication apparatuses; and
setting the partition coefficient as $α = \frac{{γ}_{{s}_{min}} {κ}_{a}}{{γ}_{{s}_{min}} {κ}_{a} + {γ}_{{c}_{max}}} ,$
wherein *κₐ* is a parameter inverse proportional to a total transmit power *P*ₘₐₓ of the base station.

10. The ISAC system according to claim 9, wherein the iterative algorithm involves, in each iteration,
determining whether the iterative algorithm has converged by comparing a difference between an objective function of a current iteration and an objective function of a previous iteration with a threshold.

11. The ISAC system according to claim 10, wherein
the objective function Obj of an iteration is given by $Obj = {\left(\left(1-α\right){γ}_{{s}_{min}}+{αγ}_{{c}_{max}}\right)}^{2} .$

12. The ISAC system according to any of claims 1 to 11, wherein
the control apparatus is configured to configure the N RIS elements to operate according to the sensing operation or the communication operation based on a result of the determination.

13. A method for an integrated sensing and communication, ISAC, system including a base station configured to serve a communication apparatus and a reconfigurable intelligent surface, RIS, having N RIS elements, wherein N is an integer equal to or larger than four, the method comprising
determining, from among the N RIS elements, a number of sensing RIS elements for a sensing operation and/or a number of communication RIS elements for a communication operation using
• a signal to noise ratio, SNR, of a radar signal from the base station with respect to a target, and a signal to interference plus noise ratio, SINR, of a communication channel between the base station and the communication apparatus, and/or
• a distance between the base station and the communication apparatus and a given range between the base station and the target.

14. A non-transient computer-readable storage medium comprising instructions which, when executed by a computer, cause the computer to carry out the steps of the method according to claim 13.

15. A computer program comprising instructions, which, when the program is executed by a computer, cause the computer to carry out the steps of the method according to claim 13.
